**Europäisches Patentamt**

**European Patent Office**

**Office européen des brevets**

(11) Veröffentlichungsnummer: **0 058 316**
A1

# EUROPÄISCHE PATENTANMELDUNG

(21) Anmeldenummer: 82100570.9

(22) Anmeldetag: 28.01.82

(51) Int. Cl.³: **C 08 L 25/12**
C 08 L 25/16, C 08 L 51/00
C 08 L 51/04, C 08 L 51/06

(30) Priorität: 07.02.81 DE 3104409

(43) Veröffentlichungstag der Anmeldung:
25.08.82 Patentblatt 82/34

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: Reimann, Horst, Dr.
Adelheidstrasse 26
D-6520 Worms(DE)

(72) Erfinder: Illers, Karl Heinz, Dr.
Huttenstrasse 20
D-6701 Otterstadt(DE)

(72) Erfinder: Lindenschmidt, Gerhard, Dr.
Buchenweg 11
D-6906 Leimen(DE)

(72) Erfinder: Overhoff, Heinz-Juergen, Dr.
Max-Slevogt-Strasse 13B
D-6710 Frankenthal(DE)

(72) Erfinder: Scharf, Bernhard, Dr.
Branichstrasse 3
D-6905 Schriesheim(DE)

(72) Erfinder: Schwaab, Josef, Dr.
Rieslingweg 8
D-6735 Maikammer(DE)

(54) Schlagzähe thermoplastische Formmassen.

(57) Neue schlagzähe thermoplastische Formmassen aus einem Styrol- und/oder α-Methylstyrol-Acrylnitril-Copolymerisat, einem Pfropfmischpolymerisat, das gebildet wird aus einem Butadienpolymerisat, auf welches Styrol und Acrylnitril aufgepropft ist, einem Polyamid auf Piperazin-Basis sowie gegebenenfalls üblichen Zusatzstoffen.

EP 0 058 316 A1

BASF Aktiengesellschaft     O.Z. 0050/034921

## Schlagzähe thermoplastische Formmassen

Die Erfindung betrifft neue thermoplastische Formmassen, die eine Hartkomponente aus Styrol- bzw. $\alpha$-Methylstyrol--Acrylnitril-Copolymerisaten, ein Pfropfmischpolymerisat und ein Polyamid auf Piperazin-Basis enthalten.

Es ist bekannt, daß man thermoplastisch verarbeitbare und schlagzähe Formmassen mit guten Verarbeitungseigenschaften erhält, wenn man zu mit kautschukartigen Polymerisaten schlagzäh modifizierten Styrol-Acrylnitril-Copolymerisaten Gleitmittel zusetzt, um das Fließverhalten zu verbessern.

Für schlagzäh modifizierte Styrol-Acrylnitril-Copolymerisate geeignete Gleitmittel sind u.a. Fettsäureester von ein- und mehrwertigen Alkoholen, Amide von langkettigen Fettsäuren und Sulfonsäure, Alkali- und Erdalkali-Salze von Fettsäuren. Solche Gleitmittel sind beispielsweise in der DE-OS 16 20 824 und 27 04 679 beschrieben.

Alle diese Gleitmittel führen aber in schlagzäh modifizierten Styrol-Acrylnitril-Copolymerisaten zu Formmassen mit mehr oder weniger großen Mängeln. Häufig wird eine Belagbildung an der Oberfläche von Fertigteilen oder eine verminderte Zähigkeit beobachtet.

Es bestand also die Aufgabe, Formmassen auf der Basis von mit kautschukartigen Polymerisaten schlagzäh modifizierten Styrol-Acrylnitril-Polymerisaten zu schaffen, die eine gute Mechanik und eine hohe Fließfähigkeit besitzen.

Diese Aufgabe wird durch die erfindungsgemäßen Formmassen gelöst, welche als Gleitmittel ein mit dem Styrol-Acrylnitril-Copolymerisat mischbares Polyamid enthalten.

Vo/P

Gegenstand der Erfindung sind somit schlagzähe thermoplastische Formmassen, bestehend im wesentlichen aus

(A) 20 bis 89, vorzugsweise 40 bis 85 Gew.-Teilen einer Hartkomponente aus einem oder mehreren Copolymerisaten von Styrol und/oder $\alpha$-Methylstyrol mit Acrylnitril, wobei diese Copolymerisate 20 bis 40 Gew.% Acrylnitril einpolymerisiert enthalten,

(B) 10 bis 60, vorzugsweise 14 bis 55 Gew.-Teilen eines Pfropfmischpolymerisates, das gebildet wird aus

   (B$_1$) 40 bis 85 Gew.%, bezogen auf (B) eines Butadienpolymerisates und/oder eines Copolymerisates, das gebildet wird aus Butadien, Acrylsäurebutylester und/oder Acrylsäureethylhexylester, und/oder eines Copolymerisates, das gebildet wird aus 30 bis 77 Gew.% Acrylsäurebutylester und/oder Acrylsäureethylhexylester, 20 bis 80 Gew.% Butadien und 3 bis 10 Gew.% Vinylalkylether mit 1 bis 8 Kohlenstoffatomen im Alkylrest, wobei sich die Prozente zu 100 addieren, und/oder eines Polymerisates aus der Gruppe der Alkylester der Acrylsäure, mit 1 bis 8 Kohlenstoffatomen im Alkylrest, und/oder eines Copolymerisates aus Ethylen-Propylen und einer Dienkomponente, worauf

   (B$_2$) 15 bis 60 Gew.%, bezogen auf (B) einer Mischung von Styrol und Acrylnitril im Gewichtsverhältnis 88 : 12 bis 65 : 35 aufgepfropft ist, und

(C) 1 bis weniger als 20, vorzugsweise 1 bis 10 Gew.--Teilen eines Polyamids, das gebildet wird aus

0058316

(a)   0 bis 18, vorzugsweise 8 bis 13 Gew.% Adipinsäure/Hexamethylendiamin-Salz und

(b)   10 bis 82, vorzugsweise 92 bis 87 Gew.% eines
Salzes von Piperazin und einem Gemisch von Decandicarbonsäure und Azelainsäure im Molverhältnis 70 : 30 bis 95 : 5, vorzugsweise 80 : 20
bis 92 : 8 und gegebenenfalls

(c)   aus noch anderen Polyamid bildenden Ausgangsstoffen, sowie

(D)   - gegebenenfalls - üblichen Zusatz- und/oder Hilfsstoffen in wirksamen Mengen, wobei die Summe der
Gewichtsteile A, B und C gleich 100 ist.


Die in den erfindungsgemäßen Formmassen enthaltene Komponente (A) ist eine Hartkomponente aus einem oder mehreren
Copolymerisaten von Styrol und/oder α-Methylstyrol mit
Acrylnitril. Der Acrylnitril-Gehalt in diesen Copolymerisaten der Hartkomponente (A) soll 20 bis 40 Gew.%, bezogen
auf das jeweilige Copolymerisat der Hartkomponente, betragen. Zu dieser Hartkomponente (A) zählen auch wie weiter
unten erläutert, die bei der Pfropfmischpolymerisation zur
Herstellung der Komponente (B) entstehenden freien, nicht
gepfropften Styrol/Acrylnitril-Copolymerisate. Je nach den
bei der Pfropfmischpolymerisation für die Herstellung des
Pfropfmischpolymerisates (B) gewählten Bedingungen kann es
möglich sein, daß bei der Pfropfmischpolymerisation schon
ein hinreichender Anteil an Hartkomponente (A) gebildet
worden ist. Im allgemeinen wird es jedoch nötig sein, die
bei der Pfropfmischpolymerisation erhaltenen Produkte mit
zusätzlicher, separat hergestellter Hartkomponente (A) zu
mischen.


Bei der separat hergestellten Hartkomponente (A) kann es
sich um ein Styrol/Acrylnitril-Copolymerisat, ein α-Methyl-

0058316

styrol/Acrylnitril-Copolymerisat oder ein α-Methylstyrol/
Styrol/Acrylnitril-Terpolymerisat handeln. Diese Copolymerisate können einzeln oder auch in Mischung miteinander
für die Hartkomponente eingesetzt werden, so daß es sich
bei der Hartkomponente (A) der erfindungsgemäßen Formmassen
beispielsweise um eine Mischung aus einem Styrol/Acrylnitril-Copolymerisat und einem α-Methylstyrol/Acrylnitril-
-Copolymerisat handeln kann. In dem Fall, in dem die Hartkomponente (A) der erfindungsgemäßen Formmassen aus einer
Mischung von einem Styrol/Acrylnitril-Copolymerisat und
einem α-Methylstyrol/Acrylnitril-Copolymerisat besteht,
soll der Acrylnitril-Gehalt der beiden Copolymerisate
tunlichst nicht mehr als 10 Gew.%, vorzugsweise nicht mehr
als 5 Gew.%, bezogen auf das Copolymerisat, voneinander
abweichen. Die Hartkomponente (A) der erfindungsgemäßen
Massen kann jedoch auch nur aus einem einzigen Styrol/
Acrylnitril-Copolymerisat bestehen, nämlich dann, wenn
bei den Pfropfmischpolymerisationen zur Herstellung der
Komponente (B) als auch bei der Herstellung der zusätzlichen, separat hergestellten Hartkomponenten von dem
gleichen Monomer-Gemisch aus Styrol und Acrylnitril ausgegangen wird.

Die Hartkomponente (A) kann nach den herkömmlichen Methoden
erhalten werden. So kann die Copolymerisation des Styrols
und/oder α-Methylstyrols mit dem Acrylnitril in Masse, Lösung, Suspension oder wäßriger Emulsion durchgeführt werden.
Die Hartkomponente (A) hat vorzugsweise eine Viskositätszahl von 40 bis 100, insbesondere von 50 bis 85 ml/g. Die
Bestimmung der Viskositätszahl erfolgt analog DIN 53 726;
dabei werden 0,5 g Material in 100 ml Dimethylformamid gelöst.

Die Herstellung des Pfropfmischpolymerisates (B) kann in zwei Stufen erfolgen. Hierzu wird zunächst die Pfropfgrundlage ($B_1$) hergestellt.

Zunächst wird in der Grundstufe ein Kautschuklatex auf herkömmliche Weise hergestellt. Der Grundkautschuk ist durch seine Glastemperatur definiert, die unterhalb von $0°C$, vorzugsweise unterhalb von $-40°C$, liegen soll. Als Monomere werden Butadien alleine, Butadien und Ester der Acrylsäure verwendet. Da für manche Zwecke Butadien-Styrol- bzw. Butadien-Acrylnitril-Kautschuke bzw. Terpolymerisate aus Butadien, Acrylsäureestern und Vinylalkylethern Vorteile zeigen, können auch Monomeren-Gemische eingesetzt werden. Im Falle der Verwendung von Kautschuken auf reiner Acrylatbasis werden noch vernetzende Monomere, wie beispielsweise Divinylbenzol, Diacrylphthalat, Ethylenglykoldimethacrylat, Triallylcyanurat, Triallylisocyanurat, Butandioldiacrylat, Tricyclodecenylacrylat zugesetzt.

Die Polymerisation wird wie üblich bei Temperaturen zwischen 30 und $90°C$ durchgeführt, in Gegenwart von Emulgatoren, wie z.B. Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.%, bezogen auf die Monomeren, verwendet. Es werden die üblichen Puffersalze, wie Natriumbicarbonat und Natriumpyrophosphat verwendet.

Ebenso werden die üblichen Initiatoren, wie Persulfate oder organische Peroxide mit Reduktionsmitteln verwendet, sowie gegebenenfalls Molekulargewichtsregler, wie Mercaptane, Terpene oder dimeres α-Methylstyrol, die am Anfang oder während der Polymerisation zugegeben werden. Das Gewichtsverhältnis Wasser zu Monomere liegt vorzugsweise zwischen 2 : 1 und 1 : 1. Die Polymerisation wird so lange fortgesetzt, bis mehr als 90 %, vorzugsweise mehr als 96 %, der Monomeren polymerisiert sind. Dieser Umsatz ist im allgemeinen nach 4 bis 20 Stunden erreicht. Der dabei erhaltene Kautschuklatex hat eine Teilchengröße, die unterhalb von 0,20 µm, vorzugsweise unter 0,15 µm, liegt. Die Teilchengrößenverteilung solcher Kautschuklatizes ist verhältnismäßig eng, so daß man von einem nahezu monodispersen System sprechen kann.

In der zweiten Stufe kann nun der Kautschuklatex agglomeriert werden. Dies geschieht z.B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Äthylacrylat, mit 0,1 bis 10 Gew.% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Äthylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.% liegen. Bei der Agglomeration werden 0,2 bis 10, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Unter den genannten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der mittlere Durchmesser der Kautschukteilchen liegt zwischen 0,02 und 0,45 um, vorzugsweise zwischen 0,26 und 0,35 um. Der erhaltene agglomerierte Kautschuklatex ist verhältnismäßig stabil, so daß er ohne weiteres gelagert und transportiert werden kann, ohne daß Koagulation eintritt.

Zur Herstellung des Pfropfmischpolymerisates (B) wird dann in einem zweiten Schritt in Gegenwart des so erhaltenen Latex des Butadien-Polymerisates ein Monomeren-Gemisch aus Styrol und Acrylnitril polymerisiert, wobei das Gewichtsverhältnis von Styrol zu Acrylnitril in dem Monomeren-Gemisch im Bereich von 88 : 12 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Butadien-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage ($B_1$), wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpoly- merisation des Gemisches von Styrol und Acrylnitril in Gegenwart des Butadien-Polymerisates wird so geführt, daß ein Pfropfgrad von 20 bis 60 Gew.%, vorzugsweise von 30 bis 50 Gew.%, im Pfropfmischpolymerisat (B) resultiert. Da die Pfropfausbeute bei der Pfropfmischpolymerisation nicht 100 %ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisates (B) ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff). Bei der Emulsions-Pfropfmischpolymerisation entstehen im allgemeinen etwa 5 bis 15 Gew.%, bezogen auf das Pfropfmischpolymerisat, an freiem, ungepfropftem Styrol/Acrylnitril-Copolymerisat. Der Anteil des Pfropfmischpolymerisates (B) in dem bei der Pfropfmischpolymerisation erhaltenen Polymerisationsprodukt wird nach der weiter unten angegebenen Methode ermittelt.

Die Herstellung derartiger Polymerisate wird beispielsweise in der DE-AS 24 27 960, DE-AS 19 11 882, DE-AS 12 60 135, DE-AS 12 38 207 beschrieben.

Die Komponente (B) kann aber auch zusammen mit der Komponente (A) in Lösung, Masse und Dispersion hergestellt werden. Dies gilt vor allem, wenn als Kautschukkomponente Terpolymere auf Basis von Ethylen, Propylen und einer Dienkomponente verwendet werden, wie es beispielsweise in der US-PS 3 515 774 und in der DE-AS 12 47 021 beschrieben wird.

Die in den erfindungsgemäßen Formmassen enthaltene Komponente (C) ist ein Copolyamid auf der Basis von Piperazin.

Es wird nach üblichen Methoden durch Schmelzpolykondensation der Komponenten bei 180 bis 300, vorzugsweise 200 bis 280°C, gegebenenfalls in Gegenwart von Spuren einer monofunktionellen Carbonsäure, wie Stearinsäure oder Propionsäure, als Molekulargewichtsregler, unter Abführung des Reaktionswassers hergestellt.

Als Cokomponenten kommen beispielsweise Adipinsäure/Hexamethylendiamin-Salz und andere Polyamid bildende Ausgangsstoffe, wie Dicarbonsäuren, ⍵-Aminocarbonsäuren und Lactame infrage. Besonders bevorzugt ist ein Copolyamid aus 8 Gew.% Adipinsäure/Hexamethylendiamin-Salz und 92 Gew.% eines Salzes von Piperazin und einem Gemisch von Decandicarbonsäure und Azelainsäure im Molverhältnis 80 : 20.

Der K-Wert der Copolyamide, gemessen nach H. Fikentscher, Cellulosechemie 13 (1932), Seiten 58 bis 64 und 71 bis 74, bei 20°C in 1 %iger Lösung in 96 %iger Schwefelsäure, liegt im allgemeinen im Bereich von 35 bis 70, vorzugsweise 40 bis 65. Solche Copolyamide sind beispielsweise in der DE-PS 26 30 114 beschrieben.

Das Mischen der Komponenten (A), (B) und (C) kann nach jeder beliebigen Weise nach allen bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen der Komponenten (A), (B) und (C) durch gemeinsames Extrudieren, Kneten oder Verwalzen der Komponenten, wobei die Komponenten notwendigenfalls zuvor aus bei der Polymerisation erhaltenen Lösung oder wäßrigen Dispersion isoliert worden sind. Die in wäßriger Dispersion erhaltenen Produkte der Pfropfmischpolymerisation (Komponente (B)) können auch nur teilweise entwässert werden und als feuchte Krümel mit der Hartkomponente (A) und dem Gleitmittel vermischt werden, wobei dann während des Vermischens die vollständige Trocknung der Pfropfmischpolymerisate erfolgt.

Die erfindungsgemäßen Mischungen aus den Komponenten (A), (B) und (C) können als weitere Komponente (D) alle Zusatzstoffe und/oder Hilfsstoffe enthalten, wie sie beispielsweise für ABS-Polymerisate üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und noch zusätzliche Gleitmittel. Die Zusatz- und Hilfsstoffe werden in üblichen und wirksamen Mengen, vorzugsweise in Mengen von 0,1 bis zu insgesamt etwa 30 Gew.%, bezogen auf die Mischung (A + B + C), eingesetzt. Als besonders günstig erweist sich dabei die Kombination des Polyamids mit dem Bisstearylamid des Ethylendiamins. Dabei werden 0 bis 99 Gew.%, bezogen auf die Menge des eingesetzten Polyamids, verwendet.

Es zeigte sich nun überraschend, daß die erfindungsgemäßen Formmassen eine hohe Zähigkeit und eine gute Fließfähigkeit besitzen und zu Fertigteilen mit belagfreier Oberfläche führen.

Die Ermittlung der Glasübergangstemperatur der Kautschuke kann z.B. nach der DSC-Methode (K.M. Illers, Makromol. Chemie 127 (1969), Seite 1) erfolgen. Die Kerbschlagzähigkeit wurde nach DIN 53 453 an bei 250°C gespritzten Norm- kleinstäben bei 23°C und bei -40°C und der Schmelzindex nach DIN 53 735 ermittelt.

Zur Prüfung der Oberflächenbelagbildung durch ausdiffundiertes Gleitmittel an den Formteilen wurden bei 200°C Preßplatten mit den Abmessungen 50 x 80 x 2 mm hergestellt. Die Preßplatten wurden bei 40°C in einer Tropenkammer gelagert. Nach bestimmten Zeiten wurde visuell kontrolliert, ob sich ein Oberflächenbelag bildete. Die mittlere Teilchengröße und die Teilchengrößenverteilung wurde aus der integralen Massenverteilung nach der Methode von W. Scholtan und H. Lange, Kolloid-Z. und Z.-Polymere 250 (1972), Seiten 782 bis 796, mittels einer analytischen Ultrazentrifuge bestimmt. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert.

Die Erfindung wird anhand einer Reihe von Beispielen erläutert. Wenn nichts anderes angegeben, sind die Mengenangaben auf das Gewicht bezogen.

Beispiele und Vergleichsversuche

Eine Hartkomponente (A), bestehend aus 35 Teilen Acrylnitril und 65 Teilen Styrol mit einer Viskositätszahl von 80 ml/g wurde durch kontinuierliche Lösungspolymerisation hergestellt.

Als Polyamidkomponente (C) wurde ein Copolyamid eingesetzt, das aus 8 Gew.% Adipinsäure/Hexamethylendiamin-Salz und 92 Gew.% Salz von Piperazin und einem Gemisch von Decandicarbonsäure und Azelainsäure im Verhältnis 80 : 20 besteht und einen K-Wert von 50 aufweist.

Als Komponente (B) wurden folgende Pfropfmischpolymerisate verwendet:

In den Beispielen 1 bis 5 und Vergleichsversuchen A bis E:

Herstellung des Pfropfmischpolymerisates (B)

Durch die Polymerisation von 57,5 Teilen Butadien in Gegenwart von 0,6 Teilen tert.-Dodecylmercaptan, 0,8 Teilen $C_{14}$-Na-Alkylsulfonat als Emulgator, 0,2 Teilen Kaliumperoxodisulfat und 0,2 Teilen Natriumpyrophosphat in 86 Teilen Wasser wurde bei 65°C in einem Autoklaven ein Polybutadienlatex hergestellt. Nach dem Druckabfall wurde die Polymerisation beendet. Der Umsatz, bezogen auf Butadien, war praktisch quantitativ. Die mittlere Teilchengröße der Polybutadienlatexteilchen lag bei 0,1 um. Der erhaltene Latex wurde durch Zusatz von 23 Teilen einer Emulsion eines Copolymeren aus 96 Teilen Ethylacrylat und 4 Teilen Methacrylamid mit einem Feststoffgehalt von 10 Gew.-Teilen agglomeriert, wobei ein Latex mit einer mittleren Teilchengröße von 0,35 um entstand. Nach Zusatz von 85 Teilen Wasser, 0,4 Teilen Na-$C_{14}$-Alkylsulfonat und 0,2 Teilen Kaliumperoxidsulfat ließ man zur Herstellung des Pfropfmischpolymerisates 45 Teile eines Gemisches von Styrol und Acrylnitril (70/30) innerhalb von 4 Stunden bei 75°C unter Rühren zulaufen. Die erhaltene Pfropfkautschukdis-persion wurde mittels Calciumchloridlösung gefällt und das abgetrennte Pfropfmischpolymerisat mit destilliertem Wasser gewaschen und getrocknet.

0058316

In den Beispielen 6 bis 7 und dem Vergleichsversuch F:

In einem Rührautoklaven, der 150 Teile destilliertes Wasser, einen Teil Na-$C_{14}$-Alkylsulfonat, 0,2 Teile Kaliumperoxodisulfat und 0,2 Teile Natriumpyrophosphat enthält, wird der Inhalt auf 65°C erhitzt. Danach werden 10 Teile Butadien, 10 Teile Butylacrylat und 3 Teile Vinylmethylether zugegeben und für die Dauer von einer Stunde gerührt. Im Anschluß daran wird im Verlauf von 6 Stunden ein Gemisch aus 20 Teilen Butadien und 32 Teilen Butylacrylat kontinuierlich zugesetzt. Danach wird für die Dauer von 2 Std. weiter polymerisiert und anschließend der Rührautoklav entspannt. Die erhaltene Polymerdispersion, die einen Feststoffgehalt von 33 % hat, zeichnet sich durch eine enge Teilchengrößenverteilung aus, wobei ein mittlerer Teilchengrößendurchmesser von 0,08 /um vorliegt. Nach Zusatz von 0,1 Teilen Kaliumperoxodisulfat wurde diese Dispersion mit einer Mischung aus 25 Teilen Styrol/Acrylnitril im Mischungsverhältnis 70 : 30 im Verlauf von 2 Stunden versetzt. Danach wird weiterhin für die Dauer von einer Stunde polymerisiert. Der Umsatz, bezogen auf Styrol/Acrylnitril, lag über 99 %.

Die Aufarbeitung des erhaltenen Pfropfmischpolymerisates erfolgte wie oben beschrieben.

In dem Beispiel 8 und dem Vergleichsversuch G:

10 Teile Acrylsäurebutylester und 0,6 Teile Tricyclodecenylacrylat wurden in 90 Teilen Wasser unter Zusatz von 0,7 Teilen Na-$C_{14}$-Alkylsulfonat und 0,2 Teilen Kaliumperoxodisulfat unter Rühren innerhalb von 45 Minuten auf 65°C erwärmt. Nach dem Erreichen der Temperatur gab man eine Mischung von 50 Teilen Acrylsäurebutylester und 1,8 Teilen Tricyclodecenylacrylat innerhalb von 4 Stunden zu. Nach

Ende des Zulaufs wurde der Polymerisationsansatz noch eine Stunde bei 65°C gerührt. Der Feststoffgehalt der Polymerisatdispersion betrug ca. 41 %. Nach Zusatz von 60 Teilen Wasser, 0,08 Teilen Dilauroylperoxid und 0,08 Teilen Kaliumperoxodisulfat ließ man zur Herstellung des Pfropfmischpolymerisates 47 Teile einer Mischung aus Styrol und Acrylnitril (70/30) innerhalb von 4 Stunden bei 65°C unter Rühren zulaufen. Der Umsatz, bezogen auf Styrol/Acrylnitril war praktisch quantitativ. Der Pfropfgrad lag bei ca. 40 %. Die erhaltene Dispersion des Pfropfmischpolymerisates wurde durch Zusatz einer 0,75 %igen wäßrigen Calciumchloridlösung gefällt. Das abgetrennte Festprodukt wurde mit destilliertem Wasser gewaschen und getrocknet.

Auf einem Mischextruder wurden die in der Tabelle angegebenen Gewichtsteile an Hartkomponente (A), Pfropfmischpolymerisat (B), Polyamid (C) und gegebenenfalls an Zusatzkomponente (D) bei 250°C aufgeschmolzen, gemischt, homogenisiert und granuliert. Alle Mischungen enthielten zusätzlich noch 0,2 Gew.-Teile eines phenolischen Antioxidans.

Tabelle

| Beispiele (erfindungs-gemäß) | Komponente A (Gew.Tle) | Komponente B (Gew.Tle) | Komponente C (Gew.Tle) | Komponente D (Gew.Tle) | Schmelz-index bei 21,5 kp 200°C (g/10min) | Kerbschlag-zähigkeit (kJ/m²) 23°C | -40°C | Oberflächen-belagbildung nach 30 Tagen |
|---|---|---|---|---|---|---|---|---|
| 1 | 52,25 | 42,75 | 5 | 0 | 6,9 | 21,0 | 12,2 | nein |
| 2 | 49,5 | 40,5 | 10 | 0 | 10,6 | 22,4 | 13,9 | nein |
| 3 | 51,25 | 42,75 | 5 | 1[1] | 6,9 | 20,9 | 12,8 | nein |
| 4 | 50,25 | 42,75 | 5 | 2[1] | 7,2 | 20,5 | 12,7 | nein |
| 5 | 49,25 | 42,75 | 5 | 3[1] | 9,1 | 19,8 | 12,4 | nein |
| 6 | 52,25 | 42,75 | 5 | 0 | 6,5 | 13,0 | 2,1 | nein |
| 7 | 49,25 | 42,75 | 5 | 3 | 8,3 | 14,2 | 2,4 | nein |
| 8 | 49,5 | 42,75 | 10 | 0 | 9,8 | 12,8 | 1,5 | nein |
| **Vergleichs-versuch (nicht erfin-dungsgemäß)** | | | | | | | | |
| A | 57,25 | 42,75 | 0 | 0 | 3,0 | 20,8 | 12,0 | nein |
| B | 54,25 | 42,75 | 0 | 3[1] | 3,7 | 20,3 | 11,8 | nein |
| C | 49,5 | 40,5 | 0 | 10[2] | 1,0 | 18,0 | 9,7 | nein |
| D | 56,55 | 42,75 | 0 | 0,7[3] | 2,9 | 20,2 | 12,3 | nein |
| E | 54,25 | 42,75 | 0 | 3[4] | 7,2 | 20,2 | 12,2 | ja |
| F | 54,25 | 42,75 | 0 | 3[1] | 3,6 | 12,2 | 2,2 | nein |
| G | 54,25 | 42,75 | 0 | 3[1] | 2,9 | 11,7 | 1,4 | nein |

1) Bisstearylamid des Ethylendiamins

2) Polyamid -6

3) 0,5 Gew.Tle Ca-Stearat und 0,2 Gew.Tle Polydimethylsiloxan

4) Glycerinmonostearat

Patentanspruch

Schlagzähe thermoplastische Formmassen, enthaltend

(A)  20 bis 89 Gew.-Teile einer Hartkomponente aus einem oder mehreren Copolymerisaten von Styrol und/oder α-Methylstyrol mit Acrylnitril, wobei diese Copolymerisate 20 bis 40 Gew.% Acrylnitril einpolymerisiert enthalten

(B)  10 bis 60 Gew.-Teile eines Pfropfmischpolymerisates, das gebildet wird aus

$(B_1)$  40 bis 85 Gew.%, bezogen auf (B) eines Butadienpolymerisates und/oder eines Copolymerisates, das gebildet wird aus Butadien, Acrylsäurebutylester und/oder Acrylsäureethylhexylester, und/oder eines Copolymerisates, das gebildet wird aus 30 bis 77 Gew.% Acrylsäurebutylester und/oder Acrylsäureethylhexylester, 20 bis 80 Gew.% Butadien und 3 bis 10 Gew.% Vinylalkylether mit 1 bis 8 Kohlenstoffatomen im Alkylrest, wobei sich die Prozente zu 100 addieren, und/oder eines Polymerisates aus der Gruppe der Alkylester der Acrylsäure, mit 1 bis 8 Kohlenstoffatomen im Alkylrest, und/oder eines Copolymerisates aus Ethylen-Propylen und einer Dienkomponente, worauf

$(B_2)$  15 bis 60 Gew.%, bezogen auf (B) einer Mischung von Styrol und Acrylnitril im Gewichtsverhältnis 88 : 12 bis 65 : 35 aufgepfropft ist, und

0058316

(C) 1 bis weniger als 20 Gew.-Teile eines Polyamids, das gebildet wird aus

(a)  0 bis 18 Gew.% Adipinsäure/Hexamethylendiamin--Salz und

(b)  10 bis 82 Gew.% eines Salzes von Piperazin und einem Gemisch von Decandicarbonsäure und Azelainsäure im Molverhältnis 70 : 30 bis 95 : 5 und gegebenenfalls

(c)  aus noch anderen Polyamid bildenden Ausgangs--stoffen, sowie

(D) - gegebenenfalls - übliche Zusatz- und/oder Hilfsstoffe in wirksamen Mengen, wobei die Summe der Gewichtsteile A, B und C gleich 100 ist.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | PATENTS ABSTRACTS OF JAPAN, Band 3, Nr. 87(C-53), 25. Juli 1979, Seite 54C53 & JP - A - 54063149 (SUMITOMO) 21-05-1979 * Zusammenfassung * ----- | 1 | C 08 L 25/12 C 08 L 25/16 C 08 L 51/00 C 08 L 51/04 C 08 L 51/06 |

RECHERCHIERTE SACHGEBIETE (Int. Cl. ³)

C 08 L

Der vorliegende Recherchenbericht wurde für alle Patentansprüche erstellt.

| Recherchenort DEN HAAG | Abschlußdatum der Recherche 17-05-1982 | Prüfer FOUQUIER J.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82